# EUROPEAN PATENT SPECIFICATION

(11) **EP 2 030 883 B1**
(45) Date of publication and mention of the grant of the patent: **27.01.2010**
(21) Application number: 07017224.2
(22) Date of filing: 03.09.2007
(51) Int. Cl.: B62J 35/00

(54) **A fuel tank assembly for a motorcycle and a motorcycle equipped with such a fuel tank assembly**
Kraftstofftankanordnung für ein Motorrad und mit einer solchen Tankanordnung ausgestattetes Motorrad
Ensemble de réservoir de carburant pour motocyclette et motocyclette équipée d'un tel ensemble de réservoir de carburant

(43) Date of publication of application: 04.03.2009
(60) Divisional application: 09015081.4
(73) Proprietor: Yamaha Motor Research & Development Europe s.r.l., 20050 Gerno di Lesmo (MI) (IT)
(72) Inventor: Tishiharu, Shigeta, 20148 Milano (IT); Locati, Claudio, 20043 Arcore (MI) (IT)
(74) Representative: Grünecker, Kinkeldey, Stockmair & Schwanhäusser Anwaltssozietät

(56) References cited:
- EP-A- 0 536 719
- EP-A- 1 081 034
- EP-A- 1 304 474
- EP-A- 1 520 774
- EP-A- 1 777 149
- JP-A- 2005 069 231
- JP-A- 2005 113 892
- JP-A- 2006 044 583
- JP-A- 2006 097 536
- US-A1- 2005 126 546

## Description

The present invention relates to a fuel tank assembly for a motorcycle and a respective motorcycle comprising such a fuel tank assembly.

As it is well known in the automotive field, motorcycles are usually equipped with a fuel pump, the purpose of which is that of collecting fuel from the fuel tank and delivering the collected fuel to the injection system of the motorcycle. This in particular applies to usual motorcycles, such as for example two-wheeled motorbikes and/or other three or four-wheeled motorcycles, such as choppers, quads, or the like. To this end, the fuel pumps usually used, comprise a collecting portion adapted to collect fuel from the fuel tank, along with a delivering portion adapted to deliver the collected fuel to the injection system of the motorcycle. Moreover, at least a fuel pipe is provided, extending from said delivering portion of the fuel tank to said injection system of the motorcycle. The collecting portion of the fuel pump is usually located inside the fuel tank, whilst the delivering portion and the fuel pipe extending therefrom are usually placed outside the fuel tank. However, finding a convenient location for the delivering portion of the fuel pump and the fuel pipe extending therefrom has revealed to be a difficult task; in particular, this is due to the fact that the location of the delivering portion of the fuel pump not only influences the overall layout of the motorcycle, but also the performances of the fuel pump, which strongly depend on the location of the delivering portion. With respect to the overall layout and design of the motorcycle, it has furthermore to be noted that once a convenient location for the delivering portion of the fuel pump has been found, a corresponding convenient location for the fuel pipe has also to be found; this however, may become quite difficult when the delivering portion of the fuel pump is placed far away from the injection system of the motorcycle. In fact, with the injection system and the delivering portion of the fuel pump being disposed far away from each other, the length of the fuel pipe may become relevant, so that it may become difficult to find a convenient path and/or location for the fuel pipe. Moreover, it has to be avoided that the fuel pipe gets disconnected from the fuel pump and/or the injection system during use of the motorcycle, due to vibrations or the like. Accordingly, corresponding fixation means have to be provided. Finding a corresponding adequate location for said fixation means may also reveal to be difficult and/or troublesome. It has, moreover, to be noted that motorcycles usually comprise covering elements mounted to the motorcycle for improving both the aerodynamics and the overall appearance or design of the motorcycle. In particular, these covering elements in some cases are provided to cover or protect mechanical components of the motorcycle such as, for instance, the engine, but also to cover or protect at least partially the fuel tank of the motorcycle. With a fuel pump situated far away from the injection system, and assuming that also fixation means are provided to avoid displacements of the fuel pipe during use, it may become troublesome to mount said covering elements to the motor vehicle since enough place has to be left under said covering elements for said fuel pipe and said fixation means. In turn, to provide enough place under said covering elements for one or both of said fuel pipe and said fixation means may require using big or cumbersome covering elements, resulting in the overall appearance of the motorcycle being negatively affected. It has also to be noted that at least an electrical cable has to be provided for supplying electrical power to the fuel pump, with the length of said electrical cable also depending on the position of the fuel pump. If also the length of said electrical cable becomes relevant, it may also become difficult to find or provide enough place for said electrical cable under said covering means. In terms of performance of the fuel pump and the injection system, in combination, it has to be noted that the pressure of the fuel along the fuel pipe depends on the length of the fuel pipe and decreases from a maximum value in proximity of the fuel pump and along side fuel pipe. Accordingly, it may come out that, in the case of a fuel pipe of a relevant length, the pressure of the fuel in proximity of the injection system decreases to a value under the minimum value required for the correct functioning of the injection system. Finally, it has to be noted that placing the fuel pump far away from the injection system may pose serious problems during maintenance of the motorcycle, since it may become difficult to gain access to said pump or to the fuel pipe extending therefrom.

In an attempt to meet as many as possible of the criteria and/or requirements outlined above, several solutions have been proposed in recent years by the manufacturers of motorcycles. In particular, according to the most common solutions as proposed by the manufacturers of motorcycles, the fuel pump is located as close as possible to the injection system. However, even if, on the one hand, placing the fuel pump close to the injection system allows to overcome or at least to minimize at least some of the problems described above, on the other hand, other problems arise in the case of such a layout, as it will become more apparent from the following disclosure.

According to one of the most common layouts proposed by the motorcycle manufacturers during the last years, the fuel pump or at least the collecting portion thereof is located below the fuel tank; in particular, in some cases, said delivering portion is mounted to the bottom wall of the fuel tank. In more detail, said delivering portion is screwed on a corresponding aperture formed in the bottom wall of the fuel tank. However, other component parts of the motorcycle, such as for instance, the injection system or at least the air filter thereof are also located below the fuel tank. Accordingly, the assembling operations might become troublesome and/or difficult, resulting in the time required for the assembly operations being unduly elongated and the corresponding costs being unduly increased. Moreover, when the need arises to remove the fuel pump from the fuel tank, for instance during maintenance or due to damages to the fuel pump, difficulties and/or problems may arise due to the lack of space left at the disposal of the operator. In the same way, when a new pump needs to be mounted to the bottom wall of the fuel tank, or even when the original pump, once it has been repaired, has to be mounted again to the fuel tank, the same problems may arise, due to lack of space. Very often, in the case of this layout, the fuel pump may be removed from or mounted to the fuel tank only after other components located below the fuel tank have been removed. Finally, it has to be noted that, in the case of this layout, namely in the case of a fuel pump being mounted to the bottom wall of the fuel tank, only fuel tanks made of steel or similar metals may be used; in fact, only in the case of tanks made of steel fuel leakages between the fuel pump and the corresponding aperture formed in the bottom wall of the fuel tank may be avoided. On the contrary, for instance in the case of fuel tanks made of plastic, these leakages of fuel may not be avoided, due to the fact that the dimensions of the plastic fuel tank may vary depending on the external conditions, in particular on the external temperature. However, for some applications, plastic fuel tanks may be preferred due to their low costs.

A further example of a fuel tank assembly is disclosed in document US 2005/126546 A1 which describes all the features of the preamble of claim 1.

Therefore, it results from the above that in spite of all the efforts made, the solutions proposed in the past and known in the prior art do not meet all the essential requirements which have to be taken into consideration during the design of a motorcycle. In particular, the proposed solutions do not meet the need of a fuel tank assembly wherein the fuel pump is located at a convenient position allowing to offer good performance in terms of functionality and easy assembly and/or maintenance, as well as in terms of the overall look and appearance of the motorcycle.

Accordingly, in view of the above, it is an object of the present invention to provide a fuel tank assembly for a motorcycle, with said assembly comprising a fuel tank and a fuel pump, wherein said fuel pump is located at a position with respect to the fuel tank such as to offer adequate performance in terms of functionality, easy assembly and maintenance, but without negatively affecting other important criteria and/or requirements, such as, for instance the overall dimensions and/or the external look of the motorcycle.

In general terms, the present invention is based on the consideration that the problems affecting the prior art layouts relating to the fuel tank assembly may be overcome by mounting the fuel pump or at least the delivering portion thereof on the top of the fuel tank, in particular on the top wall of the fuel tank. A further consideration on which the present invention is based relates to the fact that, when this layout is selected, in particular when this location for the fuel pump or at least the delivering portion thereof is selected, also the fuel pipe may be conveniently arranged, in spite of its increased length due to the increased distance between the fuel pump or at least the delivering portion thereof and the injection system of the motorcycle. A further consideration on which the present invention is based relates to the fact that, by opportunely arranging at least the fuel pipe with respect to the fuel tank or at least by opportunely fixing at least said fuel pipe to the fuel tank, adequate covering means may be mounted on at least said fuel tank without negatively affecting the overall dimensions and look of the motorcycle.

On the basis of the considerations as stated above, the above mentioned problems posed are overcome by the features stated in independent claim 1.

Preferred embodiments of the present invention are laid down in the dependent claims.

Further advantages, objectives, features as well as further embodiments of the present invention are defined in the appended claims and will become more apparent with the following detailed description when taken with reference to the accompanying drawings, in which identical or corresponding parts are identified by the same reference numerals. In particular, in the drawings:
Figure 1 relates to a schematic side view of a motorcycle adapted to be equipped with a fuel tank assembly according to the present invention;
Figure 2 relates to a schematic side cross-sectional view of a fuel tank assembly according to a first embodiment of the present invention;
Figure 3A relates to an enlarged view of the fuel tank assembly according to the first embodiment of the present invention depicted in Figure 2;
Figure 3B relates to a schematic top view of the fuel tank assembly according to the embodiment of the present invention depicted in Figures 2 and 3A;
Figure 3C relates to an enlarged view of further features of the fuel tank assembly according to the embodiment of the present invention depicted in Figures 3A and 3B;
Figure 4 relates to an enlarged view of a cover belonging to a further embodiment of the fuel tank assembly according to the present invention;
Figure 5A relates to an enlarged view of a further embodiment of the fuel tank assembly according to the present invention comprising the cover depicted in Figure 4;
Figure 5B relates to a schematic side cross-sectional view of the further embodiment of the fuel tank assembly according to the present invention depicted in Figure 5A and comprising the cover depicted in Figure 4;
Figure 6 relates to an enlarged view of a further embodiment of the cover depicted in Figure 4 and belonging to a further embodiment of the fuel tank assembly according to the present invention.

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but rather the described illustrative embodiments merely exemplify the various aspects and features of the present invention, the scope of which is defined by the appended claims.

The present invention is understood to be of particular advantage when applied to two-wheeled motorcycles, such as, for instance, motorbikes. For this reason, examples will be given in the following, in which corresponding embodiments of the fuel tank assembly according to the present invention are applied to motorbikes. However, it has to be noted that the applications of the fuel tank assembly according to the present invention are not limited to the case of motorbikes. On the contrary, the fuel tank assembly according to the present invention may also be applied to other motorcycles, in particular to three or even four-wheeled motorcycles such as for instance, choppers, quads, or the like.

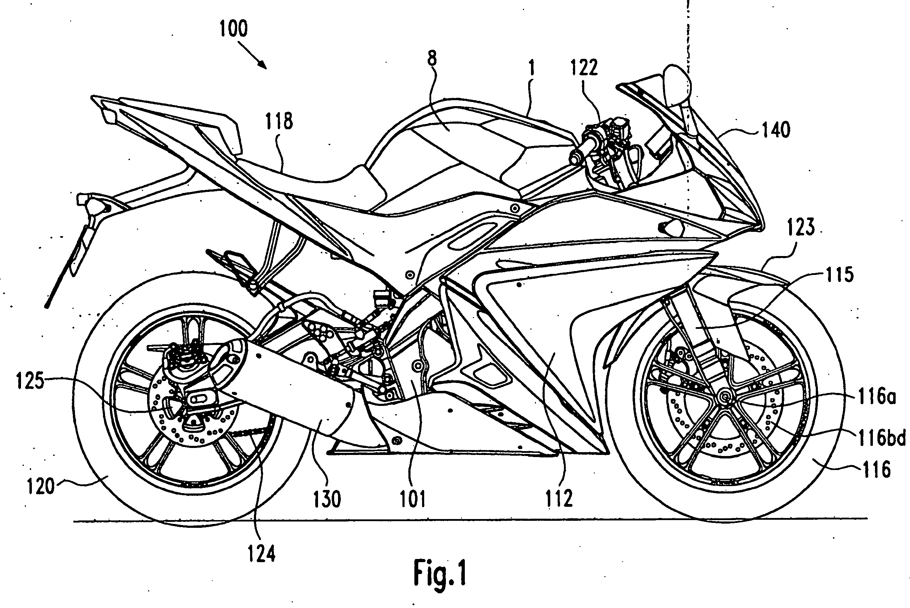

In the following, some details and features of the fuel tank assembly according to the present invention will be described with reference to Figure 1.

In Figure 1, a motorcycle 100 is depicted. Although some portions or component parts common to usual motorcycles have been omitted in Figure 1 for the sake of clarity, the essential features of common motorcycles have been depicted in Figure 1 and relate in particular to a fuel tank assembly 1 comprising a cover or covering element 8 covering or protecting a fuel tank (which has therefore to be understood as being located below said covering element 8). Further side covering elements 112 are mounted to the motorcycle 100 on opposite sides thereof; components of the motorcycle such as, for instance, the crankcase, the cylinder or the like have therefore to be understood as being located in the area defined by said side covering elements, in combination, and therefore as being located behind the right side cover element 112 depicted in Figure 1. A front cowling element 140 is located at the front end portion of the motorcycle 100, with said front cowling element 140 comprising and/or supporting components such as, for instance, headlights, front direction indicators, rear mirrors, speedometer or the like. A front wheel 116 comprising a brake disk 116bd is supported by a front fork 115, with said front wheel 116 being attached to said front fork 115 by means of a front axle 116a.

The motorcycle 100 further comprises a rear wheel 120 with a sprocket 125, a chain 124 being further provided to transmit drive force to the rear wheel 120 through the rear sprocket 125. Still in Figure 1, reference numeral 122 identifies a handlebar provided with brake handles and corresponding cables extending therefrom. Moreover, reference numeral 123 identifies a front fender provided to avoid the motorcycle 100 and the driver and/or passenger being splashed with mud. Reference numeral 130 identifies a silencer belonging to an exhaust gas apparatus extending from the cylinder to the rear of the motorcycle (therefore partially covered in Figure 1 by the sidecover element 112). A seat 118 is further provided, with said seat 118 being placed behind the fuel assembly 1, in particular behind the cover 8 and the fuel tank located below or under said cover 8. Finally, the motorcycle or Figure 1 comprises an injection system generally identified in Figure 1 by reference numeral 101.

As anticipated above some usual component parts and/or features of common motorcycles have not been depicted in Figure 1 for the sake of clarity; the features not depicted may relate for instance to a rear cushion, rear fender, a speed reducer, details of the engine and/or crankcase or even the cylinder, rear direction indicators, or the like. Even if not strictly essential to the present invention, these omitted features and/or their equivalents have to be considered as comprised in the motorcycle as depicted in Figure 1.

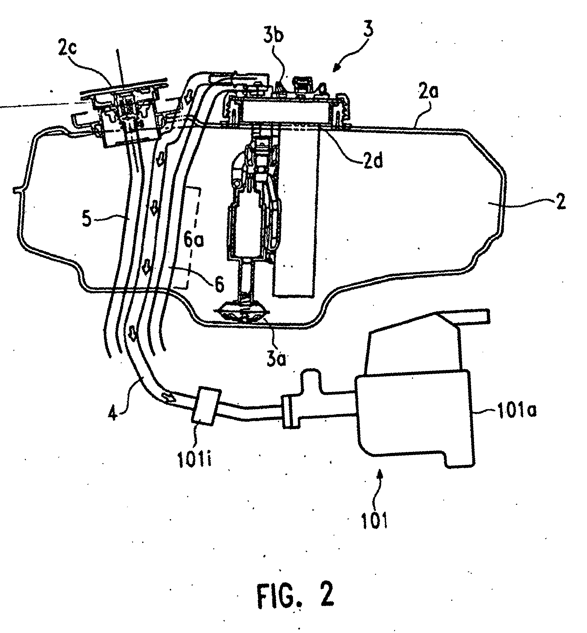

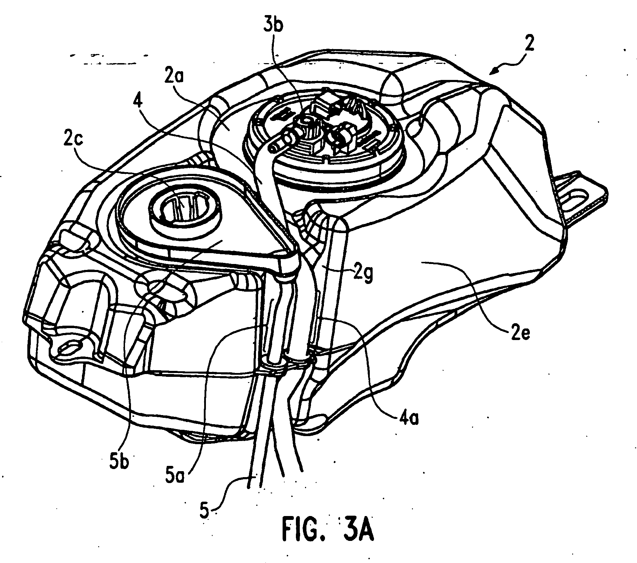

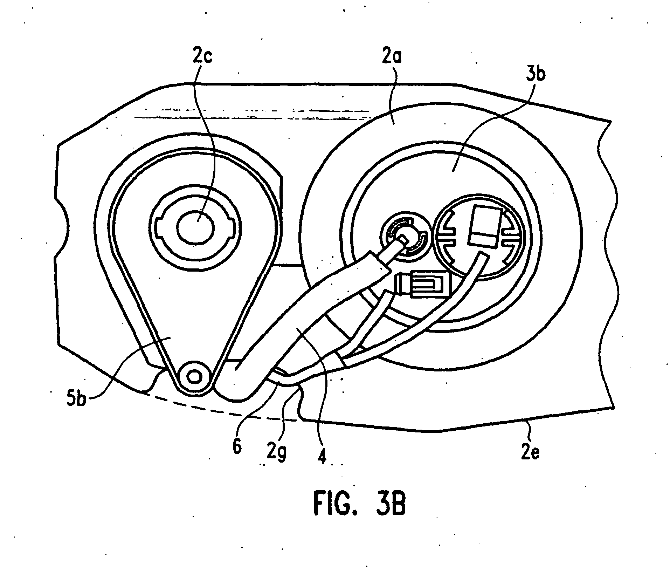

As apparent from Figure 1, the injection system 101 of the motorcycle depicted therein is located in the area below the fuel tank assembly 1, in particular below the fuel tank located below the fuel tank cover 8 and therefore not explicitly depicted in Figure 1. The fuel tank assembly 1 further comprises a fuel pump (not depicted in Figure 1), adapted to collect fuel from the fuel tank and to deliver same to the injection system 101; at least one fuel pipe is also provided, extending from the fuel pump to the injection system 101. The particular location of the fuel pump and the fuel pipe, in particular with respect to the fuel tank, will become more apparent from the following disclosure given with reference to Figures 2, 3A and 3B.

In Figures 2, 3A and 3B, those features which have been already described above with reference to Figure 1 are identified by the same reference numerals.

As apparent from Figures 3A and 2 in combination, the fuel tank assembly 1 according to the embodiment of the present invention depicted therein, comprises a fuel tank 2 adapted to be filled with fuel through an aperture 2c; the aperture 2c is moreover adapted to be closed by means of a cap or plug (not depicted in the drawings), said cap or plug being further adapted to be removed from the aperture 2c any time the need arises to fill the tank 2 with fuel. According to the circumstances and/or exigencies the cap or plug may comprise a screw plug or the like, eventually comprising a locking device with a key. A fuel pump 3 is also provided, adapted to collect fuel from the fuel tank 2 and to deliver the collected fuel to the injection system 101 of the motorcycle 100. To this end, the fuel pump 3 comprises a collecting portion 3a received inside the fuel tank 2 and a delivering portion 3b in fluid connection with said collecting portion 3a; in particular, as apparent from Figures 3A and 2, said delivering portion 3b is mounted to the upper wall 2a of the fuel tank 2. This particular location of the delivering portion 3b of the fuel pump 3 allows to overcome many of the drawbacks affecting the prior art fuel tank assemblies; in fact, mounting the delivering portion 3b to the upper wall 2a of the fuel tank 2 allows to overcome the problems relating to leakage of fuels which arise in those cases in which the delivering portion of the fuel pump is mounted to the bottom wall of the fuel tank. Moreover, since the problems related to leakage of fuel are avoided, a fuel tank made of plastic or equivalent materials, for instance a molded plastic fuel tank, may be used, with evident advantages in terms of overall costs of the fuel tank assembly and therefore of the motorcycle. A fuel pipe 4 extends from the receiving portion 3b of the fuel pump 3 to the injection system 101 (see also Figure 2) so as to establish a fluid connection between said delivering portion 3b of said fuel pump 3 and said injection system 101. According to the circumstances and/or exigencies, said injection system 101 may comprise a fuel injector 101 i and an air filter 101 a (see for example Figure 2); however, it has to be noted that the injection system falls outside the scope of the present invention so that further details relating to said injection system may be avoided. As apparent in particular from Figure 2, at least one electrical cable 6 is also provided for the purpose of supplying electrical power to the fuel pump 3; in particular, as apparent from Figure 2, a first end portion of said electrical cable 6 is connected to the delivering portion 3b of said fuel pump 3 with said electrical cable 6 extending from said delivering portion 3b. Even if not explicitly depicted in the drawings, it can be appreciated that said electrical cable 6 is adapted to be connected through a second end portion opposite to said first end portion to either the battery or to an electrical control unit or the like of the motorcycle. Still with reference to Figure 2 it appears that at least a portion 6a of said electrical cable 6 extends beside the fuel pipe 4; this disposition of the fuel pipe 4 and/or the electrical cable 6 offers further advantages in terms of the overall layout of the motorcycle, as will become more apparent with the following disclosure. The embodiment of the present invention depicted in Figures 2, 3A, and 3B, further comprises an overflow pipe 5 extending from a collecting basin 5b; during use of the motorcycle and in case of fuel overflowing from the fuel tank 2 through the aperture 2c, the overflowing fuel may be collected by the collecting basin 5b and delivered through the overflow pipe 5 to a overflowing system (not depicted in the drawings) from which the overflowing fuel is filled again into the fuel tank 2. As apparent from Figures 2, 3A and 3B, also the overflow pipe 5 or at least a portion 5a thereof extends beside the fuel pipe 4 and the electrical cable 6. As anticipated above, the advantages arising from this particular disposition of the overflow pipe 5, the fuel pipe 4, and the electrical cable 6 will be disclosed in more detail in the following.

It clearly appears from Figures 3A and 3B in combination, that the fuel tank 2 further comprises a side wall 2e extending downward from said upper wall 2a; in particular, said side wall 2e defines a recess 2g wherein at least portions 5a, 4a and 6a of said overflow pipe 5, said fuel pipe 4, and said electrical cable 6, respectively, are received. Said recess 2g extends between said upper wall 2a and a bottom wall of said fuel tank 2 (see in particular Figure 2). According to the embodiment of the fuel tank assembly 1 of the present invention depicted in the drawings, said recess 2g extends from said upper wall 2a to the bottom wall of the fuel tank 2 in a direction substantially vertical; however, it has to be noted that also other solutions are possible according to the circumstances. For instance, depending on the location of the injection system 101 with respect to the fuel tank 2 and/or the delivering portion 3b of the fuel pump 3, the recess 2g may extend at an angle between the upper wall 2a and the bottom wall of the fuel tank 2. The recess 2g further extends from the side wall 2e toward the inside of the fuel tank 2 (toward the top in Figure 3b) for a predefined depth; in particular, according to the embodiment depicted in Figure 3b, the depth of the recess 2g may be selected so as to allow said portions 6a, 5a and 4a of said electrical cable 6, said overflow pipe 5 and said fuel pipe 4 to be received inside said recess 2g so as to not extend beyond the side wall 2e of said fuel tank 2 (see in particular the dashed line in Figure 3b). As will become more apparent from the following disclosure, disposing the electrical cable 6, the fuel pipe 4 and the overflow pipe 5 inside the recess 2g of the sidewall 2e of the fuel tank 2 allows to mount a cover or covering element to the fuel tank 2, with said cover or covering element matching with the external dimensions and shape of the fuel tank 2; that means that no additional space is needed for disposing the fuel pipe 4, the electrical cable 6 and the overflow pipe 5 between the fuel tank 2 and said cover 8.

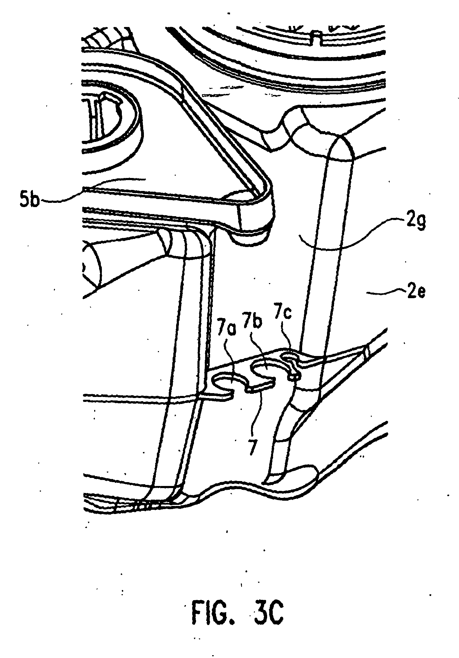

In the following, further details and/or features of the fuel tank assembly according to the present invention will be described with reference to Figure 3C wherein, as usual, features and/or details already described above with reference to previous Figures are identified by the same reference numbers.

Figure 3C relates to particular details of the fuel tank 2 belonging to the fuel tank assembly 1 of the present invention. As apparent from Figure 3C, wherein, for the sake of clarity and convenience, the fuel pipe 4, the overflow pipe 5 and the electrical cable 6 depicted in Figure 2 have been omitted, fixing means are mounted to the fuel tank 2 inside the recess 2g defined by its side wall 2e. In particular, said fixing means comprise a membrane or blade 7, extending in a direction substantially transverse to the direction along which the recess 2g extends. Moreover, said membrane 7 comprises indentations or notches 7a, 7b and 7c, the dimension and shape of which are selected so as to allow the overflow pipe 5, the fuel pipe 4 and the electrical cable 6 to be elastically forced into said indentations 7a, 7b and 7c, respectively. These indentations allow to avoid movement or displacement of the overflow pipe 5, the fuel pipe 4 and the electrical cable 6 during use of the motorcycle, for instance due to vibrations or the like. Moreover, by means of the elastic membrane 7 it may be avoided that the overflow pipe 6, the fuel pipe 4 and the electrical cable 6 come outside of the recess 2g so as to extend beyond the side wall 2e of the fuel tank 2.

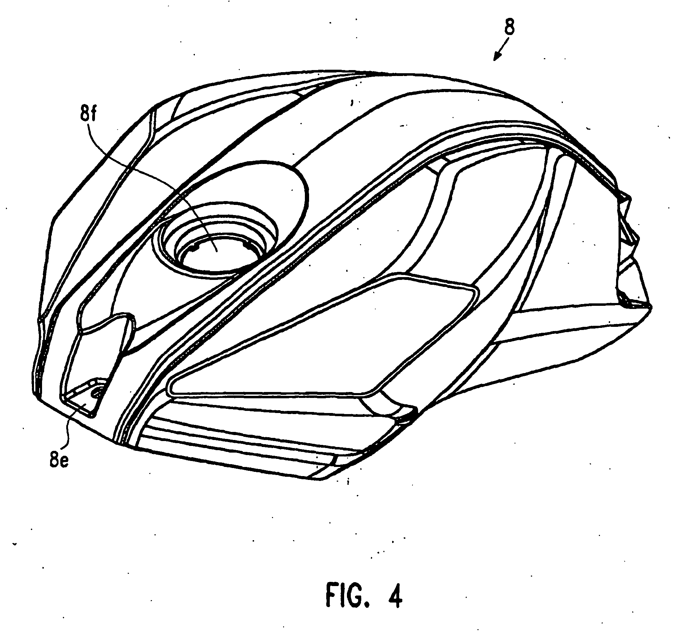

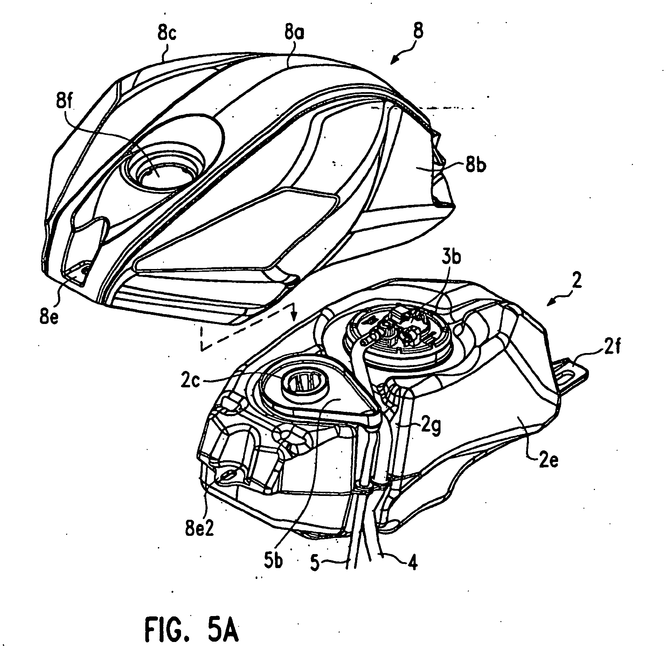

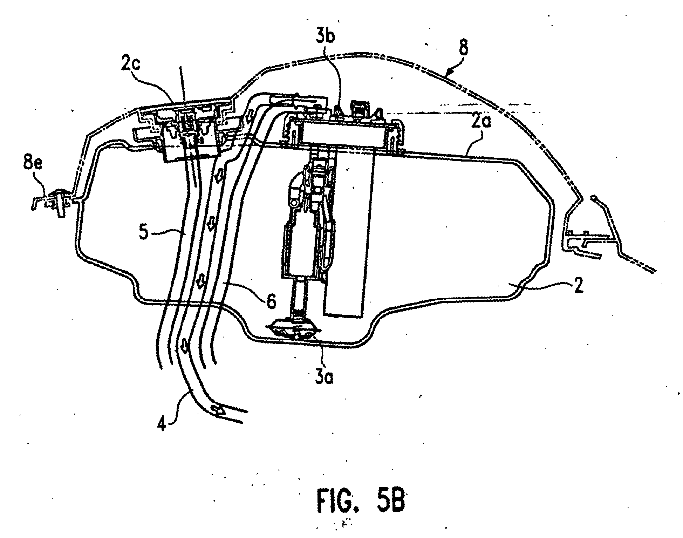

In the following, a further embodiment of the fuel tank assembly according to the present invention will be described with reference to Figures 4, 5A and 5B; again, in Figures 4, 5A and 5B, those features of the fuel tank assembly according to the present invention which have been disclosed above with reference to previous Figures are identified by the same reference numerals.

In Figure 4 a cover or covering element 8 is depicted. As apparent from Figures 5A and 5B, said cover or covering element 8 is adapted to be mounted to the fuel tank 2 so as to cover said fuel tank 2 at least partially. To this end, the cover 8 comprises a trough aperture 8f adapted to be located in correspondence to the aperture 2c of the fuel tank 2, once said cover 8 has been mounted to said fuel tank 2. Moreover, the cover 8 comprises fixing means 8e adapted to cooperate with corresponding fixing means 8e2 of said fuel tank 2 so as to allow said cover 8 to be firmly fixed to said fuel tank 2. For instance, according to the circumstances, the cover 8 may be fixed to the fuel tank 2 by means of screwing means such as, screws, bolts or the like, received into corresponding apertures of the fixing means 8e and 8e2. As apparent from Figures 5A and 5B in combination, the cover element 8 comprises a central portion 8a wherein the trough aperture 8f is provided. As apparent from Figure 5B, said central portion 8a is adapted to cover, once said cover element 8 has been mounted to said fuel tank 2, at least the upper wall 2a of the fuel tank 2 and the delivering portion 3b of the fuel pump 3 mounted to said upper wall 2a of said fuel tank 2. The cover 8 further comprises, as apparent from Figure 5A, a first side portion 8b extending downward from said central portion 8a; it appears clearly from Figure 5A, that said first side portion 8b is adapted to cover at least partially said side wall 2e of said fuel tank 2 once said cover 8 has been mounted to said fuel tank 2. In particular, the side portion 8b of the cover 8 is adapted to cover at least partially the recess 2g defined by the side wall 2e of the fuel tank 2 and at least portions 6a, 5a and 4a of said electrical cable 6, said overflow pipe 5 and said fuel pipe 4, respectively, received inside said recess 2g. The length or extension in the substantially vertical direction of the side portion 8b of the cover 8 may be selected according to the circumstances and/ exigencies; for instance, it may be provided that the side portion 8b of the cover 8 extends to a length such that the recess 2g defined by the lateral wall 2e and the fuel pipe 4, the overflow pipe 5 and the electrical cable 6 or portions thereof received inside said recess 2g are substantially completely covered by said side portion 8b once said cover 8 has been mounted to said fuel tank 2.

It appears moreover from Figure 5A that the cover 8 comprises a second side portion 8c extending downward from said central portion 8a and being located opposite said first side portion 8b; similarly to the case of the side portion 8b, the length or extension of the side portion 8c downward from said central portion 8a may be selected according to the circumstances and/or exigencies. Finally, it appears from Figures 5A and 5B that the fuel tank 2 comprises fixing means 2f adapted to firmly fix said fuel tank 2 to the motorcycle 1, for instance to the chassis or main frame thereof. To this end, screwing means such as screws, bolts or the like may be used, with said screwing means being received into an aperture of said fixing means 2f.

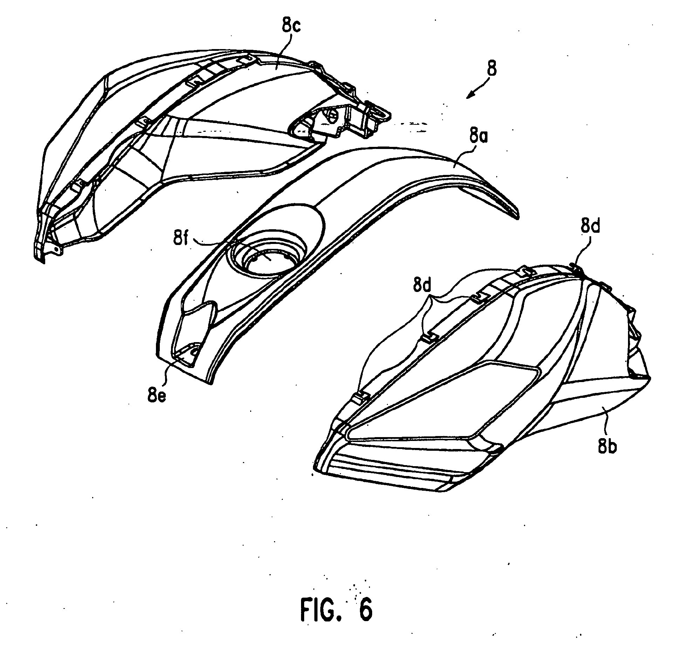

In the following, with reference to Figure 6, further details of the cover 8 adapted to be implemented in a further embodiment of the fuel tank assembly according to the present invention will be described; as usual, in Figure 6, those features which have been already disclosed and/or described above with reference to previous Figures are identified by the same reference numerals.

As apparent from Figure 6, the side portions 8b and 8c of the cover element depicted therein are adapted to be alternatively fixed to and removed from said central portion 8a; to this end, connecting means 8d are provided on the edges of said side portions 8d and 8c facing said central portion 8a, as well as on the opposite edges of said central portion 8a facing said side portions 8b and 8c, respectively. The number and kind of said connecting means may be selected according to the circumstances; for instance, clips or the like may be provided. The solution depicted in Figure 6 allows to simplify and speed up both the assembly and maintenance operation. For instance, when the need arises to gain access to the delivering portion 3b of the fuel pump, only the central portion 8a of the cover 8 may be removed. In the same way, when the need arises to gain access to one or more of the fuel pipe 4, the overflow pipe 5 and the electrical cable 6 received inside the recess 2g defined by the side wall 2e of the fuel tank 2, only the side portion 8b of the cover 8 may be removed without any need to remove one of the central portion 8a and the side portion 8c.

It arises therefore from the above disclosure that the fuel tank assembly according to the present invention allows the drawbacks affecting the prior art fuel tank assemblies to be overcome or at least reduced or minimized. In particular, it has been demonstrated with the above disclosure that the fuel tank assembly according to the present invention offers evident advantages in terms of functionality and design. It has in fact been demonstrated that the particular location of the fuel pump, in particular of the delivering portion thereof on the upper portion or wall of the fuel tank allows using tanks of plastic or equivalent materials without any risk of fuel leakages being run. Moreover, disposing the fuel pump or at least the delivering portion thereof on the upper portion or wall of the fuel tank allows to simplify and speed up the assembly and/or maintenance operations with corresponding evident advantages in terms of reduced assembly and maintenance costs. Further advantages offered by the fuel tank assembly according to the present invention are due to the particular location and disposition of one or more of the fuel pipe extending from the fuel pump, the overflow pipe and the electrical cable provided for supplying electrical power to the fuel pump. In fact, locating or even fixing one of said pipes or cable inside a recess defined by a lateral wall or portion of the fuel tank allows to keep the overall dimension of the fuel tank assembly as reduced as needed, with evident corresponding advantages in terms of the overall look or appearance of the motorcycle implementing said fuel tank assembly. Moreover, problems relating to the undesired displacement or movement of one of said pipes or cables during use of the motorcycle are also avoided. Finally, the assembly and maintenance operations may also be simplified and sped up by providing a cover for the fuel tank, with said cover comprising detachable portions such as a central portion and two opposite side portions extending from said central portion.

While the present invention has been described with reference to the particular embodiments depicted in the drawings, it has to be understood that the present invention is not limited to the particular embodiments described, but rather that various amendments may be introduced into the embodiments described without departing from the scope of the present invention, which is defined by the appended claims.

For instance, it will appear clear to those skilled in the art that fuel tanks of different shapes and dimensions may be implemented and used in the fuel tank assembly according to the present invention. As an example, fuel tanks having a substantially rounded shape or at least a substantially rounded upper portion or wall may also be implemented in the fuel tank assembly of the present invention according to the circumstances and/or exigencies and without departing from the scope of the present invention.

## Claims

1. A fuel tank assembly (1) for a motorcycle (180), said assembly comprising a fuel tank (2) with an upper wall (2a) and a fuel inlet aperture adapted to allow said fuel tank to be filled with fuel, said fuel tank assembly (1) further comprising a fuel pump (3) with a collecting portion (3a) adapted to collect fuel from said fuel tank (2) and a delivering portion (3b) adapted to deliver fuel to the injection system (101) of said motorcycle (100); said delivering portion (3b) of said fuel pump (3) being placed on the upper wall (2a) of said fuel tank (2) behind said fuel inlet aperture (2c) when viewed from a driver or passenger seating on said motorcycle,
said fuel tank (2) further comprising at least one side wall (2e) extending downwardly from said upper wall (2a), **characterized in that** said at least one side wall (2e) defines a recess (2g) extending from said side wall (2e) toward the inside of said fuel tank (2), and **in that** said assembly further comprises at least one fuel pipe (4) extending from said delivering portion (3b) of said fuel pump (3), at least a portion (4a) of said fuel pipe (4) being received in said recess (2g).

2. An assembly as claimed in claim 1;
**characterized in that**;
said recess (2g) is defined by a curved portion of said side wall (2e).

3. An assembly as claimed in one of claims 1 and 2;
**characterized in that**:
at least one over flow pipe (5) is adapted to collect fuel exiting from said fuel inlet aperture (2c), at least a portion (5a) of said over flow pipe being received in said recess (2g)

4. An assembly as claimed in one of claims 1 to 3;
**characterized in that:**
said assembly further comprises at least one electrical cable (6) adapted to supply electrical power to said fuel pump (3), at least a portion (6a) of said electrical cable (6) being received in said recess (2g)

5. An assembly as claimed in one of claims 1 to 4;
**characterized in that**:
said fuel tank (2) further comprises a bottom wall, and **in that** said recess (2g) extends from said upper wall (2a) to said bottom wall.

6. An assembly as claimed in claim 5;
**characterized in that**:
said recess (2g) extends from said upper wall (2a) to said bottom wall in a direction substantially vertical.

7. An assembly as claimed in claim 6;
**characterized in that**:
said at least one portion (4a) of said fuel pipe (4), said at least one portion (5a) of said over flow pipe (5) and said at least one portion (6a) of said electrical cable (6) received in said recess (2g) also extend in a direction substantially vertical.

8. An assembly as claimed in one of claims 1 to 7;
**characterized in that**:
said recess (2g) extends from said side wall (2e) toward the inside of said fuel tank (2) for a predefined depth, and **in that** said at least one portion (4a) of said fuel pipe (4), said at least one portion (5a) of said over flow pipe (5) and said at least one portion (6a) of said electrical cable (6) are received inside said predefined depth so as to not extend beyond said side wall (2e) of said fuel tank (2).

9. An assembly as claimed in one of claims 1 to 8;
**characterized in that:**
said assembly further comprises fixing means (7) received in said recess and adapted to firmly fix at least one of said at least one portion (4a) of said fuel pipe (4), said at least one portion (5a) of said over flow pipe (5) and said at least one portion (6a) of said electrical cable (6) in said recess (2g).

10. An assembly as claimed in claim 9;
**characterized in that**:
said fixing means (7) comprise a membrane of an elastic material with at least one indentation or notch (7a) into which at least one of said at least one portion (4a) of said fuel pipe (4), said at least one portion (5a) of said over flow pipe (5) and said at least one portion (6a) of said electrical cable (6) may be forced so as to be firmly fixed in said recess (2g).

11. An assembly as claimed in claim 10;
**characterized in that**:
said fixing means comprise at least one clip (7b) adapted to firmly fix one of said at least one portion (4a) of said fuel pipe (4), said at least one portion (5a) of said over flow pipe (5) and said at least one portion (6a) of said electrical cable (6) in said recess (2g).

12. An assembly as claimed in one of claims 1 to 11;
**characterized in that**:
said recess (2g) is disposed between said delivering portion (3b) of said fuel pump (3) and said inlet aperture (2c) of said fuel tank (2).

13. An assembly as claimed in one of claims 1 to 12;
**characterised in that**:
Said collecting portion (3a) of said fuel pump (3) is received inside said fuel tank (2), and **in that** said delivering portion (3b) of said fuel pump (3) is placed on an aperture (2d) of said upper wall (2a) of said fuel tank (2).

14. An assembly as claimed in claim 13;
**characterized in that**:
said delivering portion (3b) of said fuel pump (3) is screwed on said aperture (2d) of said upper wall (2a) of said fuel tank (2).

15. An assembly as claimed in one of claims 1 to 14;
**characterized in that**:
said fuel tank (2) is of a plastic material.

16. An assembly as claimed in claim 15;
**characterized in that**:
said fuel tank (2) is a molded tank.

17. An assembly as claimed in one of claims 1 to 16;
**characterized in that**:
said assembly further comprises a cover (8) adapted to at least partially cover said fuel tank (2).

18. An assembly as claimed in claim 17;
**characterized in that**:
said cover (8) comprises a central portion (8a) adapted to at least partially cover said upper wall (2a) of said fuel tank (2).

19. An assembly as claimed in claim 18;
**characterized in that**:
said central portion (8a) of said cover (8) is adapted to cover at least said delivering portion (3b) of said fuel pump (3).

20. An assembly as claimed in claim 19;
**characterized in that**:
said central portion (8a) of said cover (8) is adapted to cover at least said delivering portion (3b) and said inlet aperture (2c) of said fuel pump (3).

21. An assembly as claimed in one of claims 17 to 20;
**characterized in that**:
said cover (8) further comprises a first side portion (8b) extending downwardly from said central portion (8a) and adapted to cover at least said recess (2g) of said side wall (2e) of said fuel tank (2).

22. An assembly as claimed in claim 21;
**characterized in that**:
said first side portion (8b) of said cover (8) is positioned close to said fuel pipe (4) received in said recess (2g).

23. An assembly as claimed in one of claims 21 and 22;
**characterized in that**:
said cover further comprises a second side portion (8c) extending downwardly from said central portion (8a) opposite to said first side portion (8b).

24. An assembly as claimed in claim 23;
**characterized in that**:
said first side portion (8b) and said second side portion (8c) of said cover (8) are .detachably connected to said central portion (8a) of said cover (8) through connecting means (8d).

25. An assembly as claimed in claim 24;
**characterized in that**:
said connecting means comprise a plurality of clips.

26. An assembly as claimed in one of claims 18 to 25;
**characterized in that**;
said central portion (8a) of said cover (8) is adapted to be fixed to said fuel tank (2) through fixing means (8e).

27. An assembly as claimed in claim 26;
**characterized in that**:
said fixing means comprise screws or the like.

28. A motorcycle (100);
**characterized in that**:
said motorcycle (100) comprises a fuel tank assembly as claimed in one of claims 1 to 27.

29. A motorcycle (100) as claimed in claim 28;
**characterized in that**:
said recess (2g) of said fuel tank assembly (1) is disposed forwardly with respect to the injection system (101) of said motorcycle (100).

30. A motorcycle as claimed in one of claims 28 and 29;
**characterized in that**:
said motorcycle is a two wheeled motorcycle.

31. A motorcycle as claimed in one of claims 28 and 29;
**characterized in that**:
said motorcycle is a three wheeled motorcycle.

## Patentansprüche

1. Kraftstofftankanordnung (1) für ein Motorrad (100), wobei die Anordnung einen Kraftstofftank (2) mit einer oberen Wand (2a) und einer Kraftstoffeinlassöffnung umfasst, die so eingerichtet ist, dass sie das Füllen des Kraftstofftanks mit Kraftstoff zulässt, die Kraftstofftankanordnung (1) des Weiteren eine Kraftstoffpumpe (3) mit einem Auffangabschnitt (3a), der so eingerichtet ist, dass er Kraftstoff aus dem Kraftstofftank (2) auffängt, und einem Abgabeabschnitt (3b) umfasst, der so eingerichtet ist, dass er Kraftstoff an das Einspritzsystem (101) des Motorrades (100) abgibt, der Abgabeabschnitt (3b) der Kraftstoffpumpe (3) an der oberen Wand (2a) des Kraftstofftanks (2), von einem Fahrer oder Sozius aus gesehen, der auf dem Motorrad sitzt, hinter der Kraftstoffeinlassöffnung (2c) angeordnet ist, und der Kraftstofftank (2) des Weiteren wenigstens eine Seitenwand (2e) umfasst, die sich von der oberen Wand (2a) nach unten erstreckt, **dadurch gekennzeichnet, dass** die wenigstens eine Seitenwand (2e) eine Aussparung (2d) aufweist, die sich von der Seitenwand (2e) zur Innenseite des Kraftstofftanks (2) hin erstreckt, und dadurch, dass die Anordnung des Weiteren wenigstens ein Kraftstoffrohr (4) umfasst, das sich von dem Abgabeabschnitt (3b) der Kraftstoffpumpe (3) aus erstreckt, wobei wenigstens ein Abschnitt (4e) des Kraftstoffrohrs (4) in der Aussparung (2g) aufgenommen ist.

2. Anordnung nach Anspruch 1;
**dadurch gekennzeichnet, dass**:
die Aussparung (2g) durch einen gekrümmten Abschnitt der Seitenwand (2e) gebildet wird.

3. Anordnung nach einem der Ansprüche 1 und 2;
**dadurch gekennzeichnet, dass**:
wenigstens ein Überlaufrohr (5) so eingerichtet ist, dass es Kraftstoff auffängt, der über die Kraftstoffeinlassöffnung (2c) austritt, wobei wenigstens ein Abschnitt (5a) des Überlaufrohres in der Aussparung (2g) aufgenommen ist.

4. Anordnung nach einem der Ansprüche 1 bis 3;
**dadurch gekennzeichnet, dass**:
die Anordnung des Weiteren wenigstens ein elektrisches Kabel (6) umfasst, das so eingerichtet ist, dass es der Kraftstoffpumpe (3) Strom zuführt, wobei wenigstens ein Abschnitt (6a) des elektrischen Kabels (6) in der Aussparung (2g) aufgenommen ist.

5. Anordnung nach einem der Ansprüche 1 bis 4;
**dadurch gekennzeichnet, dass**:
der Kraftstofftank (2) des Weiteren eine untere Wand umfasst, und dadurch, dass sich die Aussparung (2g) von der oberen Wand (2a) zu der unteren Wand erstreckt.

6. Anordnung nach Anspruch 5,
**dadurch gekennzeichnet, dass**:
sich die Aussparung (2g) in einer im Wesentlichen vertikalen Richtung von der oberen Wand (2a) zu der unteren Wand erstreckt.

7. Anordnung nach Anspruch 6;
**dadurch gekennzeichnet, dass**:
sich der wenigstens eine Abschnitt (4a) des Kraftstoffrohrs (4), der wenigstens eine Abschnitt (5a) des Überlaufrohrs (5) und der wenigstens eine Abschnitt (6a) des elektrischen Kabels (6), die in der Aussparung (2g) aufgenommen sind, ebenfalls in einer im Wesentlichen vertikalen Richtung erstrecken.

8. Anordnung nach einem der Ansprüche 1 bis 7;
**dadurch gekennzeichnet, dass**:
sich die Aussparung (2g) von der Seitenwand (2e) über eine vorgegebene Tiefe zur Innenseite des Kraftstofftanks (2) hin erstreckt, und dadurch, dass der wenigstens eine Abschnitt (4a) des Kraftstoffrohrs (4), der wenigstens eine Abschnitt (5a) des Überlaufrohrs (5) und der wenigstens eine Abschnitt (6a) des elektrischen Kabels (6) innerhalb der vordefinierten Tiefe so aufgenommen sind, dass sie sich nicht über die Seitenwand (2e) des Kraftstofftanks (2) hinaus erstrecken.

9. Anordnung nach einem der Ansprüche 1 bis 8;
**dadurch gekennzeichnet, dass**:
die Anordnung des Weiteren eine Befestigungseinrichtung (7) umfasst, die in der Aussparung aufgenommen und so eingerichtet ist, dass sie wenigstens den wenigstens einen Abschnitt (4a) des Kraftstoffrohrs (4), den wenigstens einen Abschnitt (5a) des Überlaufrohrs (5) und den wenigstens einen Abschnitt (6a) des elektrischen Kabels (6) in der Aussparung (2g) befestigt.

10. Anordnung nach Anspruch 9;
**dadurch gekennzeichnet, dass**:
die Befestigungseinrichtung (7) eine Membran aus einem elastischen Material mit wenigstens einer Vertiefung oder Einkerbung (7a) umfasst, in die wenigstens der wenigstens eine Abschnitt (4a) des Kraftstoffrohrs (4), der wenigstens eine Abschnitt (5a) des Überlaufrohrs (5) oder der wenigstens eine Abschnitt (6a) des elektrischen Kabels (6) hineingedrückt werden kann, um ihn in der Aussparung (2g) zu befestigen.

11. Anordnung nach Anspruch 10;
**dadurch gekennzeichnet, dass**:
die Befestigungseinrichtung wenigstens eine Klemme (7b) umfasst, die so eingerichtet ist, dass sie den wenigstens einen Abschnitt (4a) des Kraftstoffrohrs (4), den wenigstens einen Abschnitt (5a) des Überlaufrohrs (5) oder den wenigstens einen Abschnitt (6a) des elektrischen Kabels (6) in der Vertiefung (2g) befestigt.

12. Anordnung nach einem der Ansprüche 1 bis 11;
**dadurch gekennzeichnet, dass**:
die Aussparung (2g) zwischen dem Abgabeabschnitt (3b) der Kraftstoffpumpe (3) und der Einlassöffnung (2c) des Kraftstofftanks (2) angeordnet ist.

13. Anordnung nach einem der Ansprüche 1 bis 12;
**dadurch gekennzeichnet, dass**:
der Auffangabschnitt (3a) der Kraftstoffpumpe (3) in dem Kraftstofftank (2) aufgenommen ist, und der Abgabeabschnitt (3b) der Kraftstoffpumpe (3) an einer Öffnung (2d) der oberen Wand (2a) des Kraftstofftanks (2) angeordnet ist.

14. Anordnung nach Anspruch 13;
**dadurch gekennzeichnet, dass**:
der Abgabeabschnitt (3b) der Kraftstoffpumpe (3) auf die Öffnung (2d) der oberen Wand (2a) des Kraftstofftanks (2) aufgeschraubt ist.

15. Anordnung nach einem der Ansprüche 1 bis 14;
**dadurch gekennzeichnet, dass**:
der Kraftstofftank (2) aus einem Kunststoffmaterial besteht.

16. Anordnung nach Anspruch 15;
**dadurch gekennzeichnet, dass**:
der Kraftstofftank (2) ein geformter Tank ist.

17. Anordnung nach einem der Ansprüche 1 bis 16;
**dadurch gekennzeichnet, dass**:
die Anordnung des Weiteren eine Abdeckung (8) umfasst, die so eingerichtet ist, dass sie den Kraftstofftank (2) wenigstens teilweise abdeckt.

18. Anordnung nach Anspruch 17;
**dadurch gekennzeichnet, dass**:
die Abdeckung (8) einen Mittelabschnitt (8a) umfasst, der so eingerichtet ist, dass er die obere Wand (2a) des Kraftstofftanks (2) wenigstens teilweise abdeckt.

19. Anordnung nach Anspruch 18;
**dadurch gekennzeichnet, dass**:
der Mittelabschnitt (8a) der Abdeckung (8) so eingerichtet ist, dass er wenigstens den Abgabeabschnitt (3b) der Kraftstoffpumpe (3) abdeckt.

20. Anordnung nach Anspruch 19;
**dadurch gekennzeichnet, dass**:
der Mittelabschnitt (8a) der Abdeckung (8) so eingerichtet ist, dass er wenigstens den Abgabeabschnitt (3b) und die Einlassöffnung (2c) der Kraftstoffpumpe (3) abdeckt.

21. Anordnung nach einem der Ansprüche 17 bis 20;
**dadurch gekennzeichnet, dass**:
die Abdeckung (8) des Weiteren einen ersten Seitenabschnitt (8b) umfasst, der sich von dem Mittelabschnitt (8a) nach unten erstreckt und so eingerichtet ist, dass er wenigstens die Aussparung (2g) der Seitenwand (2e) des Kraftstofftanks (2) abdeckt.

22. Anordnung nach Anspruch 21;
**dadurch gekennzeichnet, dass**:
der ersten Seitenabschnitt (8b) der Abdeckung (8) nahe an dem Kraftstoffrohr (4) angeordnet ist, das in der Aussparung (2g) aufgenommen ist.

23. Anordnung nach einem der Ansprüche 21 und 22;
**dadurch gekennzeichnet, dass**:
die Abdeckung des Weiteren einen zweiten Seitenabschnitt (8c) umfasst, der sich von dem Mittelabschnitt (8a) dem ersten Seitenabschnitt (8b) gegenüberliegend nach unten erstreckt.

24. Anordnung nach Anspruch 23;
**dadurch gekennzeichnet, dass**:
der erste Seitenabschnitt (8b) und der zweite Seitenabschnitt (8c) der Abdeckung (8) über eine Verbindungseinrichtung (8d) abnehmbar mit dem Mittelabschnitt (8a) der Abdeckung (8) verbunden sind.

25. Anordnung nach Anspruch 24;
**dadurch gekennzeichnet, dass**:
die Verbindungseinrichtung eine Vielzahl von Klemmen umfasst.

26. Anordnung nach einem der Ansprüche 18 bis 25;
**dadurch gekennzeichnet, dass**:
der Mittelabschnitt (8a) der Abdeckung (8) so eingerichtet ist, dass er über Befestigungseinrichtungen (8e) an dem Kraftstofftank (2) befestigt ist.

27. Anordnung nach Anspruch 26;
**dadurch gekennzeichnet, dass**:
die Befestigungseinrichtungen Schrauben oder dergleichen umfassen.

28. Motorrad (100);
**dadurch gekennzeichnet, dass**:
das Motorrad (100) eine Kraftstofftankanordnung nach einem der Ansprüche 1 bis 27 umfasst.

29. Motorrad (100) nach Anspruch 28;
**dadurch gekennzeichnet, dass**:
die Aussparung (2g) der Kraftstofftankanordnung (1) in Bezug auf das Einspritzsystem (101) des Motorrades (100) vorn angeordnet ist.

30. Motorrad nach einem der Ansprüche 28 und 29;
**dadurch gekennzeichnet, dass**:
das Motorrad ein zweirädriges Motorrad ist.

31. Motorrad nach einem der Ansprüche 28 und 29;
**dadurch gekennzeichnet, dass**:
das Motorrad ein dreirädriges Motorrad ist.

## Revendications

1. Ensemble de réservoir de carburant (1) pour une motocycle (100), ledit ensemble comportant un réservoir de carburant (2) muni d'une paroi supérieure (2a) et d'une ouverture d'arrivée de carburant adaptée pour permettre de remplir ledit réservoir de carburant à l'aide de carburant, ledit ensemble de réservoir de carburant (1) comportant en outre une pompe à carburant (3) ayant une partie collectrice (3a) adaptée pour recueillir le carburant provenant dudit réservoir de carburant (2) et une partie distributrice (3b) adaptée pour distribuer du carburant au système d'injection (101) dudit motocycle (100), ladite partie distributrice (3b) de ladite pompe à carburant (3) étant placée sur la paroi supérieure (2a) dudit réservoir de carburant (2) derrière ladite ouverture d'arrivée de carburant (2c) lorsque vue à partir d'un conducteur ou passager assis sur ledit motocycle,ledit réservoir de carburant (2) comportant également au moins une paroi latérale (2e) s'étendant vers le bas à partir de ladite paroi supérieure (2a), **caractérisé en ce que** ladite au moins une paroi latérale (2e) définit un évidement (2g) s'étendant à partir de ladite paroi latérale (2e) vers l'intérieur dudit réservoir de carburant (2), et **en ce que** ledit ensemble comporte en outre au moins une conduite de carburant (4) s'étendant à partir de ladite partie distributrice (3b) de ladite pompe à carburant (3), au moins une partie (4a) de ladite conduite de carburant (4) étant reçue dans ledit évidement (2g).

2. Ensemble selon la revendication 1,
**caractérisé en ce que** :
ledit évidement (2g) est défini par une partie incurvée de ladite paroi latérale (2e).

3. Ensemble selon l'une des revendications 1 et 2,
**caractérisé en ce que** :
au moins une conduite de trop-plein (5) est adaptée pour recueillir le carburant sortant par ladite ouverture d'arrivée de carburant (2c), au moins une partie (5a) de ladite conduite de trop-plein étant reçue dans ledit évidement (2g).

4. Ensemble selon l'une des revendications 1 à 3,
**caractérisé en ce que** :
ledit ensemble comporte également au moins un câble électrique (6) adapté pour fournir du courant électrique à ladite pompe à carburant (3), au moins une partie (6a) dudit câble électrique (6) étant reçue dans ledit évidement (2g).

5. Ensemble selon l'une des revendications 1 à 4,
**caractérisé en ce que** :
ledit réservoir de carburant (2) comporte en outre une paroi inférieure, et **en ce que** ledit évidement (2g) s'étend de ladite paroi supérieure (2a) à ladite paroi inférieure.

6. Ensemble selon la revendication 5,
**caractérisé en ce que** :
ledit évidement (2g) s'étend de ladite paroi supérieure (2a) à ladite paroi inférieure dans une direction sensiblement verticale.

7. Ensemble selon la revendication 6,
**caractérisé en ce que** :
ladite au moins une partie (4a) de ladite conduite de carburant (4), ladite au moins une partie (5a) de ladite conduite de trop-plein (5) et ladite au moins une partie (6a) dudit câble électrique (6) reçues dans ledit évidement (2g) s'étendent également dans une direction sensiblement verticale.

8. Ensemble selon l'une des revendications 1 à 7,
**caractérisé en ce que** :
ledit évidement (2g) s'étend à partir de ladite paroi latérale (2e) vers l'intérieur dudit réservoir de carburant (2) sur une profondeur prédéfinie, et **en ce que** ladite au moins une partie (4a) de ladite conduite de carburant (4), ladite au moins une partie (5a) de ladite conduite de trop-plein (5) et ladite au moins une partie (6a) dudit câble électrique (6) sont reçues à l'intérieur de ladite profondeur prédéfinie de manière à ne pas s'étendre au-delà de ladite paroi latérale (2e) dudit réservoir de carburant (2).

9. Ensemble selon l'une des revendications 1 à 8,
**caractérisé en ce que** :
ledit ensemble comporte en outre des moyens de fixation (7) reçus dans ledit évidement et adaptés pour fixer fermement au moins une parmi ladite au moins une partie (4a) de ladite conduite de carburant (4), ladite au moins une partie (5a) de ladite conduite de trop-plein (5) et ladite au moins une partie (6a) dudit câble électrique (6) dans ledit évidement (2g).

10. Ensemble selon la revendication 9,
**caractérisé en ce que** :
lesdits moyens de fixation (7) comportent une membrane en matériau élastique ayant au moins une entaille ou encoche (7a) dans laquelle au moins une parmi ladite au moins une partie (4a) de ladite conduite de carburant (4), ladite au moins une partie (5a) de ladite conduite de trop-plein (5) et ladite au moins une partie (6a) dudit câble électrique (6) peut être forcée de manière à être fermement fixée dans ledit évidement (2g).

11. Ensemble selon la revendication 10,
**caractérisé en ce que** :
lesdits moyens de fixation comportent au moins une attache (7b) adaptée pour fixer fermement une parmi ladite au moins une partie (4a) de ladite conduite de carburant (4), ladite au moins une partie (5a) de ladite conduite de trop-plein (5) et ladite au moins une partie (6a) dudit câble électrique (6) dans ledit évidement (2g).

12. Ensemble selon l'une des revendications 1 à 11,
**caractérisé en ce que** :
ledit évidement (2g) est disposé entre ladite partie distributrice (3b) de ladite pompe à carburant (3) et ladite ouverture d'arrivée (2c) dudit réservoir de carburant (2).

13. Ensemble selon l'une des revendications 1 à 12,
**caractérisé en ce que** :
ladite partie collectrice (3a) de ladite pompe à carburant (3) est reçue à l'intérieur dudit réservoir de carburant (2), et **en ce que** ladite partie distributrice (3b) de ladite pompe à carburant (3) est placée sur une ouverture (2d) de ladite paroi supérieure (2a) dudit réservoir de carburant (2).

14. Ensemble selon la revendication 13,
**caractérisé en ce que** :
ladite partie distributrice (3b) de ladite pompe à carburant (3) est vissée sur ladite ouverture (2d) de ladite paroi supérieure (2a) dudit réservoir de carburant (2).

15. Ensemble selon l'une des revendications 1 à 14,
**caractérisé en ce que** :
ledit réservoir de carburant (2) est en matière plastique.

16. Ensemble selon la revendication 15,
**caractérisé en ce que** :
ledit réservoir de carburant (2) est un réservoir moulé.

17. Ensemble selon l'une des revendications 1 à 16,
**caractérisé en ce que** :
ledit ensemble comporte également un couvercle (8) adapté pour recouvrir au moins partiellement ledit réservoir de carburant (2).

18. Ensemble selon la revendication 17,
**caractérisé en ce que** :
ledit couvercle (8) comporte une partie centrale (8a) adaptée pour recouvrir au moins partiellement ladite paroi supérieure (2a) dudit réservoir de carburant (2).

19. Ensemble selon la revendication 18,
**caractérisé en ce que** :
ladite partie centrale (8a) dudit couvercle (8) est adaptée pour recouvrir au moins ladite partie distributrice (3b) de ladite pompe à carburant (3).

20. Ensemble selon la revendication 19,
**caractérisé en ce que** :
ladite partie centrale (8a) dudit couvercle (8) est adaptée pour recouvrir au moins ladite partie distributrice (3b) et ladite ouverture d'arrivée (2c) de ladite pompe à carburant (3).

21. Ensemble selon l'une des revendications 17 à 20,
**caractérisé en ce que** :
ledit couvercle (8) comporte en outre une première partie latérale (8b) s'étendant vers le bas à partir de ladite partie centrale (8a) et adaptée pour recouvrir au moins ledit évidement (2g) de ladite paroi latérale (2e) dudit réservoir de carburant (2).

22. Ensemble selon la revendication 21,
**caractérisé en ce que** :
ladite première partie latérale (8b) dudit couvercle (8) est positionnée près de ladite conduite de carburant (4) reçue dans ledit évidement (2g).

23. Ensemble selon l'une des revendications 21 et 22,
**caractérisé en ce que** :
ledit couvercle comporte également une seconde partie latérale (8c) s'étendant vers le bas à partir de ladite partie centrale (8a) à l'opposé de ladite première partie latérale (8b).

24. Ensemble selon la revendication 23,
**caractérisé en ce que** :
ladite première partie latérale (8b) et ladite seconde partie latérale (8c) dudit couvercle (8) sont reliées de manière séparable à ladite partie centrale (8a) dudit couvercle (8) par des moyens de liaison (8d).

25. Ensemble selon la revendication 24,
**caractérisé en ce que** :
lesdits moyens de liaison comportent une pluralité d'attaches.

26. Ensemble selon l'une des revendications 18 à 25,
**caractérisé en ce que** :
ladite partie centrale (8a) dudit couvercle (8) est adaptée pour être fixée audit réservoir de carburant (2) par l'intermédiaire de moyens de fixation (8e).

27. Ensemble selon la revendication 26,
**caractérisé en ce que** :
lesdits moyens de fixation comportent des vis ou analogue.

28. Motocycle (100),
**caractérisé en ce que** :
ledit motocycle (100) comporte un ensemble de réservoir de carburant tel que revendiqué dans l'une des revendications 1 à 27.

29. Motocycle (100) selon la revendication 28,
**caractérisé en ce que** :
ledit évidement (2g) dudit ensemble de réservoir de carburant (1) est disposé vers l'avant par rapport au système d'injection (101) dudit motocycle (100).

30. Motocycle selon l'une des revendications 28 et 29,
**caractérisé en ce que** :
ledit motocycle est un motocycle à deux roues.

31. Motocycle selon l'une des revendications 28 et 29,
**caractérisé en ce que** :
ledit motocycle est un motocycle à trois roues.
